# EUROPÄISCHE PATENTANMELDUNG

(11) **EP 1 220 465 A1**
(43) Veröffentlichungstag der Anmeldung: **03.07.2002**
(21) Anmeldenummer: 01440401.6
(22) Anmeldetag: 28.11.2001
(51) Int. Cl.: H04B 1/707

(54) **Funkbetriebenes Telekommunikationssystem**

(30) Priorität: 27.12.2000 DE 10065238
(71) Anmelder: ALCATEL, 75008 Paris (FR)
(72) Erfinder: Warich, Anja, 70499 Stuttgart (DE); Mortensen, Ivar, Dr., 70499 Stuttgart (DE)
(74) Vertreter: Schäfer, Wolfgang

(57) **Zusammenfassung**

Es wird ein Detektor (14) für eine Basisstation (12) eines funkbetriebenen Telekommunikationssystems (10) beschrieben. Bei dem Telekommunikationssystem (10) kann von einem Mobilteil (11) ein Signal (13) erzeugt und ausgesendet werden, das als Anmeldewunsch des Mobilteils (11) bei der Basisstation (12) vorgesehen ist. Weiterhin kann bei dem Telekommunikationssystem (10) das Signal (13) von der Basisstation (12) empfangen und der Anmeldewunsch erkannt werden. Das von der Basisstation (12) empfangene Signal (13) beruht dabei auf einer Hadamard-Transformation. Weiterhin ist der Detektor (14) zur Anwendung der Hadamard-Transformation geeignet.

## Beschreibung

Die Erfindung geht aus von einem Verfahren zum Betreiben eines funkbetriebenen Telekommunikationssystems, bei dem von einem Mobilteil ein Signal erzeugt und ausgesendet wird, das als Anmeldewunsch des Mobilteils bei einer Basisstation vorgesehen ist, und bei dem das Signal von der Basisstation empfangen und der Anmeldewunsch erkannt wird. Die Erfindung betrifft ebenfalls einen Detektor für eine Basisstation eines funkbetriebenen Telekommunikationssystems, sowie die Basisstation als solche und das Telekommunikationssystem insgesamt.

Bei einem derartigen Telekommunikationssystem kann es sich beispielsweise um ein Universal Mobile Telecommunication System (UMTS) handeln. Dort ist es bekannt, dass ein Mobilteil, das sich als Teilnehmer bei einer Basisstation anmelden will, ein sogenanntes Random Access Channel (RACH) Signal aussendet. Nachdem die Basisstation das Signal empfangen hat, wird das Signal von der Basisstation verarbeitet. Insbesondere wird von der Basisstation anhand des Signals erkannt, daß ein in Reichweite der Basisstation befindliches Mobilteil einen Sendewunsch hat und sich deshalb als Teilnehmer bei der Basisstation anmelden will.

Zur Erkennung des Anmeldewunsches des Mobilteils ist es bekannt, in der Basisstation eine sogenannte Fast Fourier Transformation (FFT) auf das empfangene Signal anzuwenden. Mit dieser Vorgehensweise ist jedoch ein hoher Aufwand innerhalb der Basisstation verbunden.

Aufgabe der Erfindung ist es, ein Verfahren zum Betreiben eines funkbetriebenen Telekommunikationssystems zu schaffen, mit dem eine mit weniger Aufwand verbundene Verarbeitung des empfangenen Signals innerhalb der Basisstation möglich ist.

Diese Aufgabe wird durch das Verfahren nach dem Anspruch 1 gelöst. Die Aufgabe wird ebenfalls durch den Detektor nach dem Anspruch 8, die Basisstation nach dem Anspruch 13 und das Telekommunikationssystem nach dem Anspruch 14 gelöst.

Durch die Verwendung der Hadamard-Transformation bei der Erzeugung des Signals in dem Mobilteil, wie auch bei der Verarbeitung des Signals in der Basisstation wird der Aufwand für die Erkennung eines Anmeldewunsches innerhalb der Basisstation wesentlich vermindert. Insbesondere ist keine Fast Fourier Transformation mehr erforderlich. Statt dessen ist es ausreichend, das von der Basisstation empfangene Signal mit Hilfe der Hadamard-Transformation in der Basisstation zu verarbeiten. Hierzu ist - selbst bei einer unmittelbaren Anwendung der Hadamard-Transformation auf das empfangene Signal - kein großer Aufwand erforderlich.

Bei einer vorteilhaften Ausgestaltung der Erfindung wird bei der Erzeugung des Signals von dem Mobilteil eine Signatur auf der Grundlage der Hadamard-Transformation erzeugt und mehrfach wiederholt. Von der Basisstation wird dann aus dem empfangenen Signal die Signatur mit Hilfe der Hadamard-Transformation erkannt und auf den Anmeldewunsch des Mobilteils geschlossen. Durch die Verwendung der Signatur und die Wiederholung dieser Signatur wird die Wahrscheinlichkeit, dass das von dem Mobilteil ausgesendete Signal von der Basisstation erkannt wird, wesentlich erhöht. Der für die Verarbeitung der Wiederholungen innerhalb der Basisstation erforderliche Aufwand ist dabei jedoch gering.

Bei einer ersten Ausführungsform der Erfindung wird von der Basisstation zuerst auf jede der Wiederholungen der Signatur die Hadamard-Transformation angewendet und danach wird aus den Ergebnissen der Anwendungen der Hadamard-Transformation auf die Signatur geschlossen. Dies stellt letztlich eine unmittelbare Anwendung der Hadamard-Transformation auf die Wiederholungen der Signatur dar.

Bei einer zweiten Ausführungsform der Erfindung werden die Ergebnisse der Anwendungen der Hadamard-Transformation blockweise zusammengefasst und danach wird aus den Ergebnissen der Blöcke auf die Signatur geschlossen. Dies bringt den Vorteil mit sich, dass mögliche, bei der Übertragung des Signals von dem Mobilteil zu der Basisstation auftretende Dopplereffekte besser kompensiert werden. Der für die blockweise Verarbeitung erforderliche Aufwand ist dabei wiederum gering.

Bei einer dritten Ausführungsform der Erfindung werden von der Basisstation zuerst die Wiederholungen der Signatur miteinander verknüpft und danach wird aus den Verknüpfungen mit Hilfe der Hadamard-Transformation auf die Signatur geschlossen. Diese Ausführungsform bringt insbesondere im Vergleich zu der ersten Ausführungsform den wesentlichen Vorteil mit sich, dass die Hadamard-Transformation nur ein einziges Mal auf die Verknüpfungen der Wiederholungen angewendet werden muss. Es ist somit in der Basisstation nur ein einziges Detektorelement für die Anwendung der Hadamard-Transformation auf die Verknüpfungen erforderlich. Dies bringt eine wesentlichte Vereinfachung der Basisstation mit sich.

Bei einer vierten Ausführungsform der Erfindung werdem die Verknüpfungen der Wiederholungen blockweise zusammengefasst und danach wird aus den Ergebnissen der Blöcke auf die Signatur geschlossen. Durch diese Maßnahme werden wiederum möglicherweise auftretende Dopplereffekte besser kompenisert.

Besonders vorteilhaft ist es, wenn von dem Mobilteil bei der Erzeugung des Signals ein Scrambling-Code verwendet wird, und wenn von der Basisstation bei der Verarbeitung des Signals derselbe Scrambling-Code verwendet wird. Auf diese Weise kann die Wahrscheinlichkeit, dass das von dem Mobilteil ausgesendete Signal von der Basisstation erkannt wird, weiter erhöht werden.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.
- Figur 1: zeigt ein schematisches Blockschaltbild eines Ausführungsbeispiels eines erfindungsgemäßen Telekommunikationssystems,
- Figur 2a: zeigt ein schematisches Blockschaltbild der Grundstruktur eines Detektorelements für einen Detektor des Telekommunikationssystems der Figur 1,
- Figur 2b: zeigt ein schematisches Blockschaltbild des gesamten Detektorelements,
- Figur 3: zeigt ein schematisches Blockschaltbild eines ersten Ausführungsbeispiels des Detektors des Telekommunikationssystems der Figur 1,
- Figur 4: zeigt ein schematisches Blockschaltbild eines zweiten Ausführungsbeispiels des Detektors des Telekommunikationssystems der Figur 1,
- Figur 5: zeigt ein schematisches Blockschaltbild eines dritten Ausführungsbeispiels des Detektors des Telekommunikationssystems der Figur 1, und
- Figur 6: zeigt ein schematisches Blockschaltbild eines vierten Ausführungsbeispiels des Detektors des Telekommunikationssystems der Figur 1.

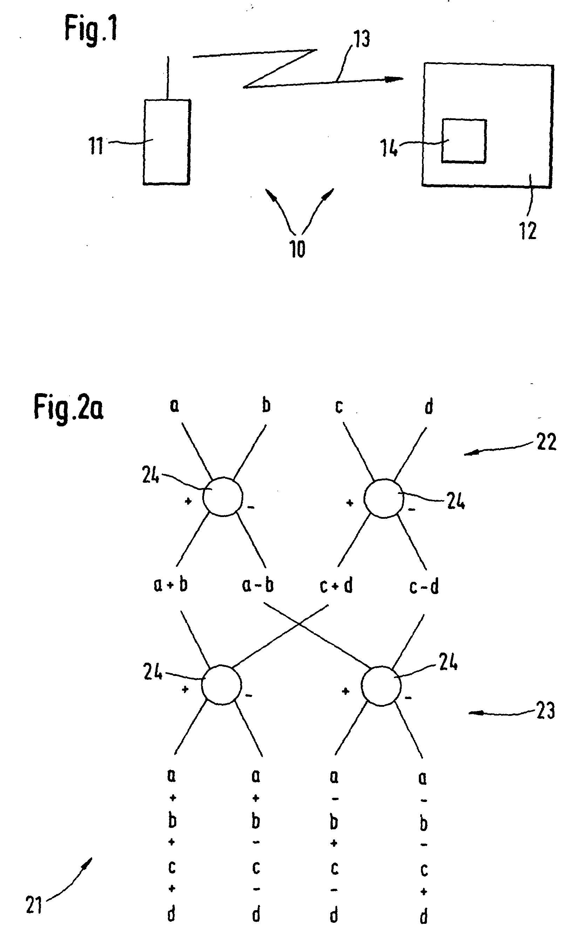

In der Figur 1 ist ein funkbetriebenes Telekommunikationssystem 10 dargestellt, das ein Mobilteil 11 und eine Basisstation 12 aufweist. Bei dem Telekommunikationssystem 10 handelt es sich um ein sogenanntes Universal Mobile Telecommunication System (UMTS). Es versteht sich, dass bei dem Telekommunikationssystem 10 auch noch weitere Mobilteile und/oder Basisstationen vorhanden sein können.

Wenn das Mobilteil 11 des Telekommunikationssystems 10 von einem Benutzer eingeschaltet wird, dann wird von dem Mobilteil 11 ein Signal 13 erzeugt und ausgesendet, mit dem das Mobilteil 11 versucht, sich bei der Basisstation 12 als Teilnehmer anzumelden. Dieses Signal 13 wird auch als Random Access Channel Signal (RACH-Signal) bezeichnet.

Das Signal 13 wird von dem Mobilteil 11 wie folgt erzeugt..

Zuerst wird von dem Mobilteil 11 eine Signatur aus einer Anzahl von zulässigen Signaturen zufällig ausgewählt. Die zulässigen Signaturen ergeben sich dabei mit Hilfe einer Hadamard-Transformation, wie nachfolgend noch erläutert wird.

Die Signatur hat eine Länge von 16 sogenannten Chips. Bei einem Chip handelt es sich um diejenige Informationseinheit, die pro Takteinheit in dem Telekommunikationssystem 10 zwischen dem Mobilteil 11 und der Basisstation 12 übertragen wird.

Diese Signatur wird 256-mal wiederholt, so dass ein Datenwort mit einer Länge von 16 x 256 = 4096 Chips entsteht. Danach wird ein Scrambling Code, der ebenfalls eine Länge von 4096 Chips aufweist, auf das vorgenannte Datenwort angewendet. Daraus entsteht das Signal 13, das dann von dem Mobilteil 11 als sogenanntes BURST-Signal ausgesendet wird.

Bei der Hadamard-Transformation handelt es sich um eine orthogonale Transformation. Dies bedeutet, dass bei einer Länge der Signatur von 16 Chips nicht 16² Kombinationsmöglichkeiten der Chips innerhalb der Signatur ausgenützt werden, wie dies an sich möglich wäre, sondern nur 16 Kombinationsmöglichkeiten. Dabei werden genau diejenigen 16 Signaturen verwendet, deren Kreuzkorrelation gleich Null ist. Es gibt somit nur 16 verschiedene Signaturen, die an 16 verschiedene Mobilteile vergeben sein können, und die dann dem Signal 13 zugrundeliegen können.

In der Basisstation 12 ist ein Detektor 14 enthalten, der dazu vorgesehen ist, ein von der Basisstation 12 empfangenes Signal 13 zu verarbeiten. Insbesondere ist der Detektor 14 dazu vorgesehen, die in dem Signal 13 enthaltene Signatur zu erkennen.

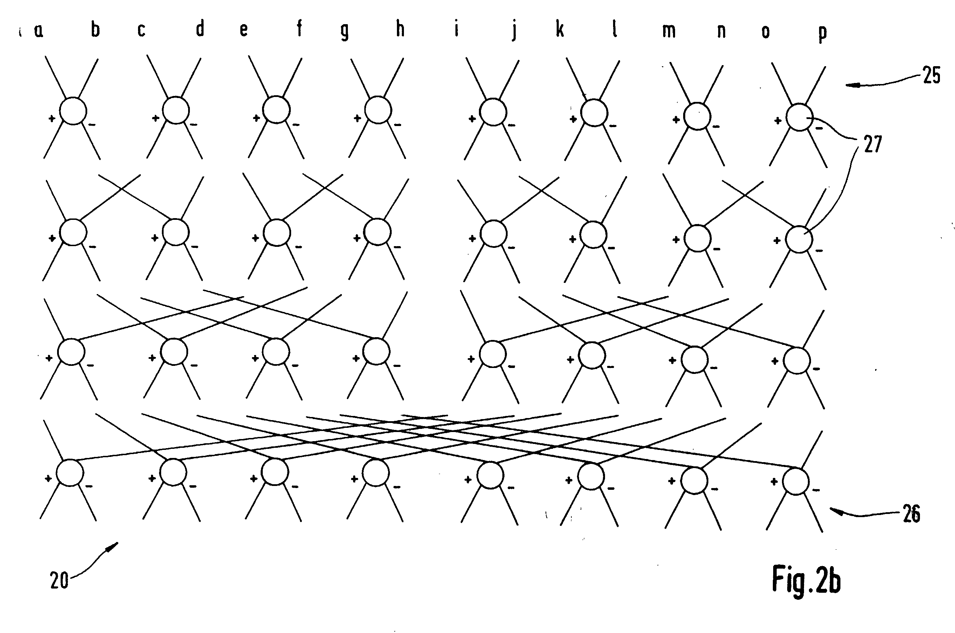

Zu diesem Zweck sind in dem Detektor 14 der Basisstätion 12 eine Mehrzahl von Detektorelementen 20 enthalten, von denen eines in der Figur 2b dargestellt ist. Zum besseren Verständnis des Detektorelements 20 der Figur 2b ist in der Figur 2a die Grundstruktur 21 des Detektorelements 20 gezeigt.

Bei der Grundstruktur 21 der Figur 2a wird von einer Signatur ausgegangen, der die Hadamard-Transformation zugrundeliegt, die aber nur eine Länge von 4 Chips aufweist. Die Grundstruktur 21 weist deshalb auch nur 4 Eingänge 22 und 4 Ausgänge 23 auf. Die an den Eingängen 22 anliegenden 4 Chips sind beispielhaft mit a, b, c, d bezeichnet. Diese Chips werden bei der Grundstruktur 21 mit Hilfe von Additions- und Subtraktionsstufen 24 miteinander derart verknüpft, dass an den Ausgängen 23 die dort angegebenen Kombinationen der Chips a, b, c, d vorhanden sind. Die in der Figur 2a dargestellte Verknüpfung der Chips entspricht dabei der Umkehrung der Hadamard-Transformation, so dass die an den Ausgängen 23 der Grundstruktur 21 vorhandenen Kombinationen der Chips a, b, c, d zueinander orthogonal sind.

Durch eine entsprechende Vervielfachung der Grundstruktur 21 der Figur 2a ergibt sich das Detektorelement 20 der Figur 2b. Bei dem Detektorelement 20 wird von einer Signatur ausgegangen, der wiederum die Hadamard-Transformation zugrundeliegt, die aber - wie eingangs bereits erwähnt wurde - eine Länge von 16 Chips aufweist. Das Detektorelement 20 weist damit 16 Eingänge 25, 16 Ausgänge 26 und eine Mehrzahl von Additions- und Subtraktionsstufen 27 auf.

Mit dem Detektorelement 20 der Figur 2b ist es damit möglich, eine unbekannte Signatur zu erkennen, die auf der Hadamard-Transformation beruht und 16 Chips lang ist. Die erkannte Signatur ergibt sich bei dem Detektorelement 20 dann daraus, dass der zugehörige Ausgang 26 sich von den anderen Ausgängen 26 des Detektorelements 20 hinsichtlich seiner Signalstärke unterscheidet.

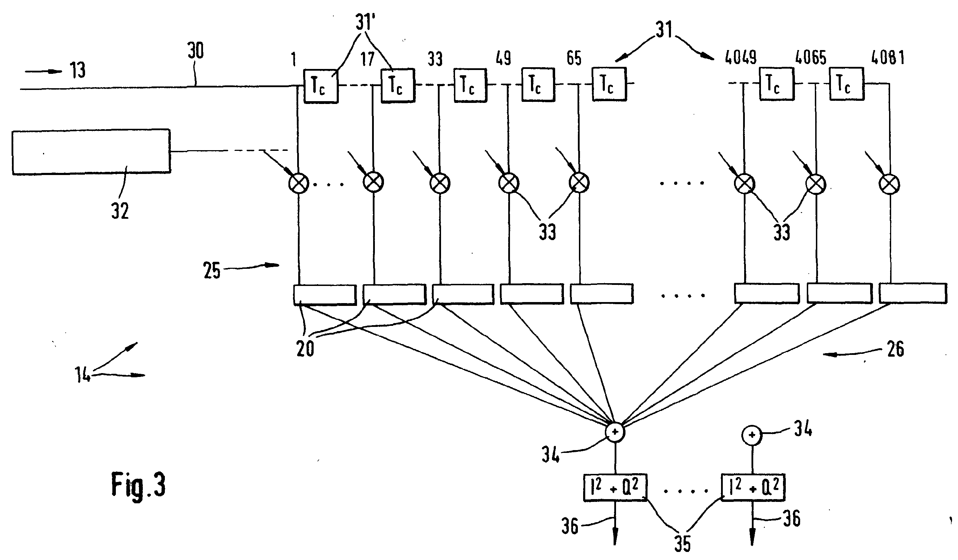

In der Figur 3 ist der Detektor 14 der Basisstation 12 dargestellt. Wie bereits erwähnt wurde, dient der Detektor 14 dazu, anhand des empfangenen Signals 13 eine oder mehrere von 16 möglichen Signaturen zu erkennen. Wird von dem Detektor eine einzige Signatur erkannt, so bedeutet dies, daß ein einzelnes Mobilteil 11 versucht, sich bei der Basisstation 12 anzumelden. Werden mehrere Signaturen erkannt, so wollen sich mehrere Mobilteile 11 bei der Basisstation 12 anmelden. Aufgrund der 16 möglichen unterschiedlichen Signaturen können sich maximal 16 Mobilteile 11 gleichzeitig bei der Basisstation 12 als neue Teilnehmer anmelden.

Das von der Basisstation 12 empfangene Signal 13 wird dem Detektor 14 über eine Leitung 30 zugeführt. Der Detektor 14 weist ein Schieberegister 31 auf, das eine Länge von 4096 Chips besitzt. In der Figur 3 sind nur einige der Stufen 31' des Schieberegisters 31 gezeigt. Jede der Stufen 31' des Schieberegisters 31 bewirkt eine Zeitverzögerung des empfangenen Signals 13 um eine Takteinheit T_{C}.

Weiterhin ist der Scrambling-Code, mit dessen Hilfe das Signal 13 von dem Mobilteil 11 erzeugt wird, in der Basisstation 12 bekannt. Dies ist in der Figur 3 durch den Block 32 zum Ausdruck gebracht. Dieser Scrambling-Code besitzt - wie bereits erwähnt wurde - eine Länge von 4096 Chips.

Der Detektor 14 weist eine Mehrzahl von Verknüpfungsoperationen 33 auf, mit deren Hilfe jeweils ein Chip des Signals 13 mit einem Chip des Scrambling-Codes verknüpft wird. Mit Hilfe der Verknüpfungsoperationen 33 wird die in dem Mobilteil 11 durchgeführte Scrambling-Funktion wieder rückgängig gemacht. Es wird also mit Hilfe der Verknüpfungsoperationen 33 dasjenige Datenwort wieder erzeugt, das in dem Mobilteil 11 vor der Scrambling-Funktion vorhanden war. Wie bereits erläutert wurde, weist dieses Datenwort eine Länge von 4096 Chips auf, wobei diese 4096 Chips eine 256-fache Wiederholung der 16 Chips langen Signatur darstellen.

Weiterhin weist der Detektor 14 insgesamt 256 Detektorelemente 20 auf, wie sie anhand der Figuren 2a und 2b bereits beschrieben worden sind. Den Eingängen 25 dieser Detektorelemente 20 sind die 4096 Chips des vorgenannten Datenworts zugeführt. Jedem Detektorelement 20 sind 16 Chips des genannten Datenworts zugeführt, wie dies auch in der Figur 2b dargestellt ist. Durch diese Ausgestaltung des Detektors 14 wird die 256-fache Wiederholung der Signatur bei der Erzeugung des Signals 13 innerhalb des Mobilteils 11 wieder rückgängig gemacht bzw. wieder aufgelöst.

Die jeweils einander entsprechenden Ausgänge 26 der Detektorelemente 20 des Detektors 14 werden - wie dies schematisch in der Figur 3 angedeutet ist - mit Hilfe von Additionsstufen 34 miteinander verknüpft. Da 256 Detektorelemente 20 vorhanden sind, werden an jeder Additionsstufe 34 immer 256 Chips miteinander verknüpft.

Jedes der Detektorelemente 20 hat gemäß der Figur 2b 16 Ausgänge 26. Damit sind auch nur 16 Additionsstufen 34 vorhanden. Jeder der Additionsstufen 34 ist ein Block 35 nachgeordnet, mit dem das Betragsquadrat des jeweils vorhandenen Ausgangssignals der Additionsstufe 34 ermittelt wird.

Auf diese Weise ergeben sich 16 Ausgangssignale 36 der Blöcke 35, die den 16 möglichen Signaturen entsprechen. Bei der erkannten Signatur unterscheidet sich das zugehörige Ausgangssignal 36 - wie bereits erläutert wurde - durch eine unterschiedliche Signalstärke von den anderen Ausgangssignalen 36 der Blöcke 35.

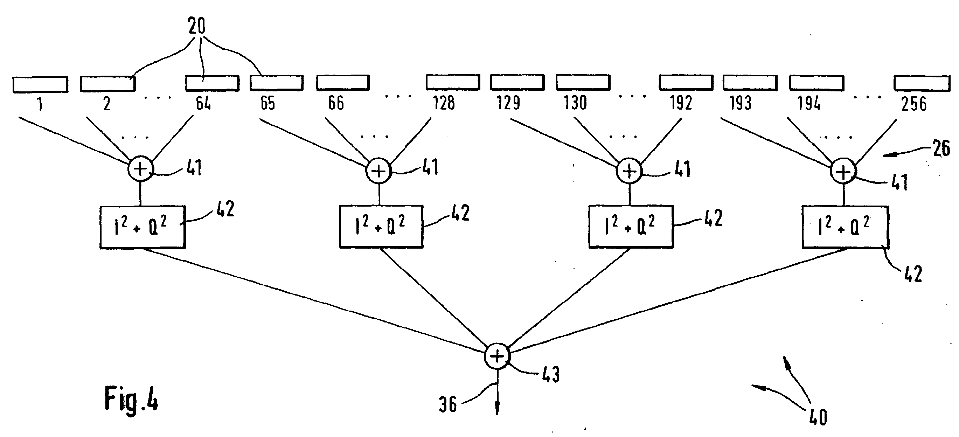

In der Figur 4 ist ein Detektor 40 gezeigt, der eine Abwandlung des Detektors 14 der Figur 3 darstellt. Gleiche Bauteile und Funktionen sind mit gleichen Bezugszeichen versehen.

Der Detektor 40 weist - wie der Detektor 14 - insgesamt 256 Detektorelemente 20 auf, wie sie aus der Figur 2b hervorgehen. Im Unterschied zu dem Detektor 14 werden die einander zugeordneten Ausgänge 26 der insgesamt 256 Detektorelemente 20 nicht alle jeweils einer der Additionsstufen 34 zugeführt, sondern es werden bei dem Detektor 40 immer z.B. 64 der 256 der einander zugeordneten Ausgänge 26 der Detektorelemente 20 miteinander verknüpft. Es versteht sich, daß anstelle von 64 Ausgängen 26 auch jede andere Anzahl von Ausgängen 26 miteinander verknüpft werden kann. Im Ausführungsbeispiel der Figur 4 sind bei dem Detektor 40 die Additionsstufen 41 vorhanden, deren Anzahl 4-fach größer ist als die Anzahl der Additionsstufen 34 des Detektors 14.

Den jeweils 4 einander zugeordneten Additionsstufen 41 des Detektors 40 sind dann jeweils 4 Blöcke 42 nachgeordnet, die wiederum der Berechnung des Betragsquadrats des vorhandenen Signals dienen. Die nunmehr vorhandenen 4 reellen Ausgangssignale der Blöcke 42 werden dann mit Hilfe von weiteren Additionsstufen 43 zusammengefasst, so dass danach wieder die 16 Ausgangssignale 36 vorhanden sind, die - wie bereits erläutert wurde - den 16 möglichen Signaturen entsprechen.

Bei dem Detektor 40 der Figur 4 wird im Vergleich zu dem Detektor 14 der Figur 3 eine verbesserte Kompensation von Dopplereffekten erreicht, die bei der Übertragung des Signals 13 zwischen dem Mobilteil 11 und der Basisstation 12 auftreten können. Ganz allgemein kann mittels der Abwandlung der Figur 4 jeglicher Frequenzoffset zwischen Quelle und Senke kompensiert werden.

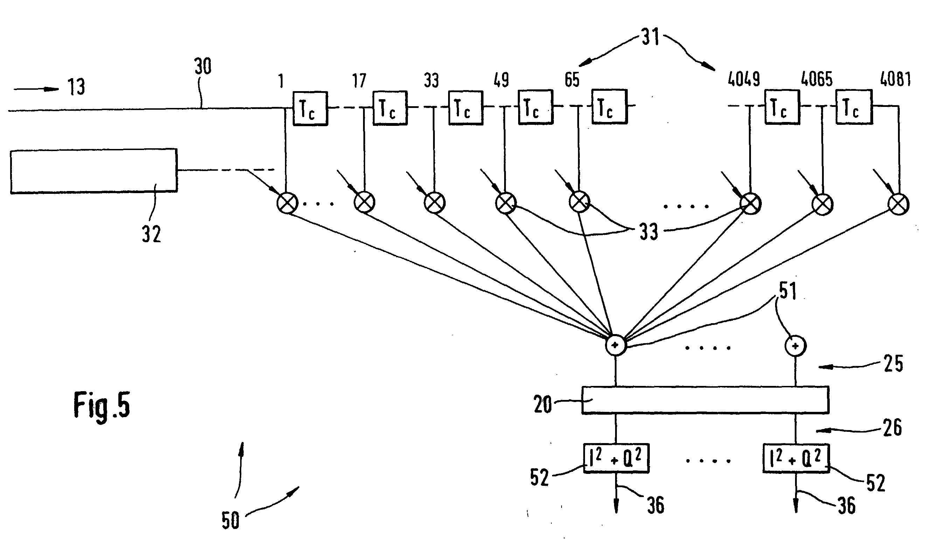

In der Figur 5 ist ein Detektor 50 gezeigt, der eine Vereinfachung des Detektors 14 der Figur 3 darstellt. Gleiche Bauteile und Funktionen sind mit gleichen Bezugszeichen versehen.

Der Detektor 50 weist - wie der Detektor 14 - die Leitung 30 für das von der Basisstation 12 empfangene Signal 13 auf, wie auch das dann nachfolgende Schieberegister 31 für die 4096 Chips des Signals 13. Ebenfalls weist der Detektor 50 - wie der Detektor 14 - den Block 32 für den Scrambling- Code sowie die Verknüpfungsoperationen 33 auf, so dass an den Ausgängen der Verknüpfungsoperationen 33 dasjenige Datenwort wieder vorhanden ist, das in dem Mobilteil 11 vor der erläuterten Scrambling-Funktion vorhanden war. Wie bereits erläutert wurde, weist dieses Datenwort eine Länge von 4096 Chips auf.

Im Unterschied zu dem Detektor 14, bei dem den Verknüpfungsoperationen 33 die Detektorelemente 20 nachgeordnet sind, sind bei dem Detektor 50 den 4096 Verknüpfungsoperationen 33 insgesamt 16 Additionsstufen 51 mit jeweils 256 Eingängen nachgeordnet. Bei diesen Additionsstufen 51 werden immer diejenigen Chips des zuvor genannten Datenworts miteinander verknüpft, die einen Abstand von 16 Chips voneinander haben und die damit demselben Chip der 16 Chip langen Signatur entsprechen. Die Wiederholung der Signatur bei der Erzeugung des Signals 13 wird somit durch diese Ausgestaltung des Detektors 50 wieder rückgängig gemacht bzw. wieder aufgelöst.

Die Ausgänge der 16 Additionsstufen 51 sind dann den 16 Eingängen 25 eines einzigen Detektorelements 20 zugeführt, wie dies aus der Figur 2b hervorgeht. Jedem der Ausgänge 26 des Detektorelements 20 ist ein Block 52 nachgeordnet, mit dem das Betragsquadrat des jeweils vorhandenen Signals ermittelt wird.
Auf diese Weise entstehen an den Ausgängen der Blöcke 52 wiederum die Ausgangssignale 36, die - wie bereits erläutert wurde - den 16 möglichen Signaturen entsprechen, mit denen 16 verschiedene Mobilteile voneinander unterschieden werden können.

Bei dem Detektor 50 der Figur 5 ist im Vergleich zu dem Detektor 14 der Figur 3 nur ein einziges Detektorelement 20 gemäß der Figur 2b erforderlich.

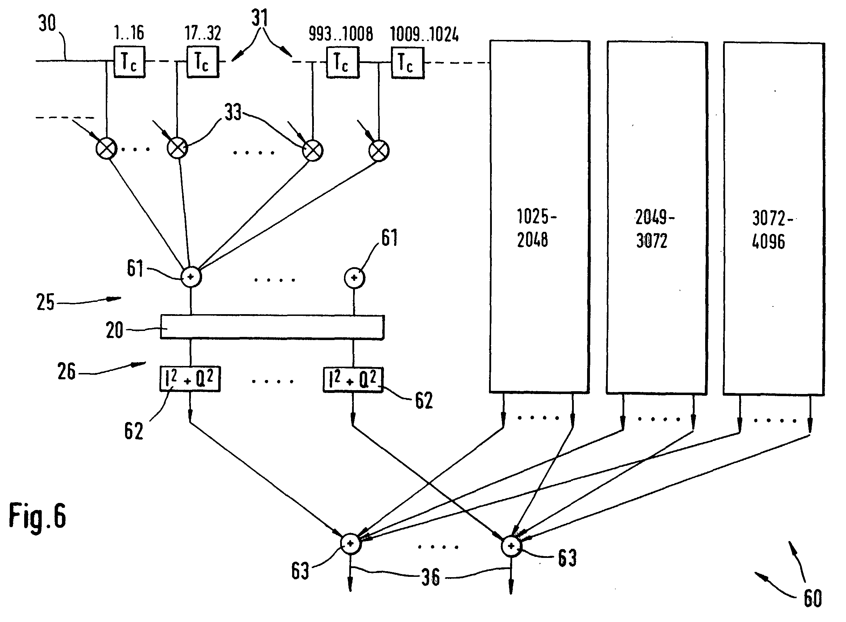

In der Figur 6 ist ein Detektor 60 gezeigt, der eine Vereinfachung des Detekors 14 der Figur 3 und eine Abwandlung des Detektors 40 der Figur 4 darstellt. Gleiche Bauteile und Funktionen sind mit gleichen Bezugszeichen versehen.

Der Detektor 60 weist - wie der Detektor 14 - die Leitung 30 für das von der Basisstation 12 empfangene Signal 13 auf, wie auch das dann nachfolgende Schieberegister 31 für die 4096 Chips des Signals 13. Ebenfalls weist der Detektor 60 - wie der Detektor 14 - den Scrambling-Code sowie die Verknüpfungsoperationen 33 auf, so dass an den Ausgängen der Verknüpfungsoperationen 33 dasjenige Datenwort wieder vorhanden ist, das in dem Mobilteil 11 vor der erläuterten Scrambling-Funktion vorhanden war. Wie bereits erläutert wurde, weist dieses Datenwort eine Länge von 4096 Chips auf.

Im Unterschied zu dem Detektor 14, bei dem den Verknüpfungsoperationen 33 die Detektorelemente 20 nachgeordnet sind, sind bei dem Detektor 60 den 4096 Verknüpfungsoperationen 33 insgesamt 4 x 16 = 64 Additionsstufen 61 nachgeordnet. Es versteht sich, daß anstelle der 64 Additionsstufen 61 auch jede andere Anzahl zwischen 1 x 16 = 16 und 256 x 16 = 4096 gewählt werden kann. In der Figur 6 werden bei den Additionsstufen 61 dann immer diejenigen Chips des zuvor genannten Datenworts miteinander verknüpft, die einen Abstand von 16 Chips voneinander haben.

Als weiterer Unterschied werden bei dem Detektor 60 nicht alle 256 zusammengehörigen Ausgänge der Verknüpfungsoperationen 33 miteinander verknüpft, wie dies bei dem Detektor 50 der Figur 5 der Fall ist, sondern es werden bei dem Detektor 60 immer nur z.B. 64 der 256 der einander zugeordneten Ausgänge miteinander verknüpft. Dies entspricht konzeptionell der Blockbildung bei dem Detektor 40 der Figur 4. Die Wiederholung der Signatur bei der Erzeugung des Signals 13 wird somit durch diese Ausgestaltung des Detektors 60 bereits vor den Detektorelementen 20 zumindest teilweise rückgängig gemacht.

Die Ausgänge der 4 x 16 = 64 Additionsstufen 61 sind dann den 16 Eingängen 25 von insgesamt 4 Detektorelementen 20 zugeführt. Jedem der Ausgänge 26 der 4 Detektorelemente 20 ist jeweils ein Block 62 nachgeordnet, mit dem das Betragsquadrat des jeweils vorhandenen Signals berechnet wird. Die nunmehr vorhandenen 4 reellen Ausgangssignale der Blöcke 62 werden mit Hilfe von weiteren Additionsstufen 63 zusammengefasst, so dass danach wieder die 16 Ausgangssignale 36 vorhanden sind, die - wie bereits erläutert wurde - den 16 möglichen Signaturen entsprechen.

Bei dem Detektor 60 der Figur 6 sind im Vergleich zu dem Detektor 14 der Figur 3 nur 4 Detektorelemente 20 gemäß der Figur 2b erforderlich, wobei ebenfalls eine im Vergleich zu dem Detektor 14 der Figur 3 verbesserte Kompensation von Dopplereffekten erreicht wird, die bei der Übertragung des Signals 13 zwischen dem Mobilteil 11 und der Basisstation 12 auftreten können.

## Patentansprüche

1. Verfahren zum Betreiben eines funkbetriebenen Telekommunikationssystems (10), bei dem von einem Mobilteil (11) ein Signal (13) erzeugt und ausgesendet wird, das als Anmeldewunsch des Mobilteils (11) bei einer Basisstation (12) vorgesehen ist, und bei dem das Signal (13) von der Basisstation (12) empfangen und der Anmeldewunsch erkannt wird, **dadurch gekennzeichnet, dass** bei der Erzeugung des Signals (13) in dem Mobilteil (11) und bei der Erkennung des Signals (13) in der Basisstation (12) eine Hadamard-Transformation verwendet wird.

2. Verfahren nach Anspruch 1, **dadurch gekennzeichnet, dass** bei der Erzeugung des Signals (13) von dem Mobilteil (11) eine Signatur auf der Grundlage der Hadamard-Transformation erzeugt und mehrfach wiederholt wird, und dass von der Basisstation (12) aus dem empfangenen Signal (13) die Signatur mit Hilfe der Hadamard-Transformation erkannt wird.

3. Verfahren nach Anspruch 2, **dadurch gekennzeichnet, dass** von der Basisstation (12) zuerst auf jede der Wiederholungen der Signatur die Hadamard-Transformation angewendet wird und danach aus den Ergebnissen der Anwendungen der Hadamard-Transformation auf die Signatur geschlossen wird (Figur 3).

4. Verfahren nach Anspruch 3, **dadurch gekennzeichnet, dass** die Ergebnisse der Anwendungen der Hadamard-Transformation blockweise zusammengefasst werden und danach aus den Ergebnissen der Blöcke auf die Signatur geschlossen wird (Figur 4).

5. Verfahren nach Anspruch 2, **dadurch gekennzeichnet, dass** von der Basisstation (12) zuerst die Wiederholungen der Signatur miteinander verknüpft werden und danach aus den Verknüpfungen mit Hilfe der Hadamard-Transformation auf die Signatur geschlossen wird (Figur 5).

6. Verfahren nach Anspruch 5, **dadurch gekennzeichnet, dass** die Verknüpfungen der Wiederholungen blockweise zusammengefasst werden und danach aus den Ergebnissen der Blöcke auf die Signatur geschlossen wird (Figur 6).

7. Verfahren nach einem der vorstehenden Ansprüche, **dadurch gekennzeichnet, dass** von dem Mobilteil (11) bei der Erzeugung des Signals (13) ein Scrambling-Code verwendet wird, und dass von der Basisstation (12) bei der Verarbeitung des Signals (13) derselbe Scrambling-Code verwendet wird.

8. Detektor (14, 40, 50, 60) für eine Basisstation (12) eines funkbetriebenen Telekommunikationssystems (10), bei dem von einem Mobilteil (11) ein Signal (13) erzeugt und ausgesendet werden kann, das als Anmeldewunsch des Mobilteils (11) bei der Basisstation (12) vorgesehen ist, und bei dem das Signal (13) von der Basisstation (12) empfangen und der Anmeldewunsch erkannt werden kann, **dadurch gekennzeichnet, dass** das von der Basisstation (12) empfangene Signal (13) auf einer Hadamard-Transformation beruht, und dass der Detektor (14, 40, 50, 60) zur Anwendung der Hadamard-Transformation geeignet ist.

9. Detektor (14) nach Anspruch 8, **dadurch gekennzeichnet, dass** das von der Basisstation (12) empfangene Signal (13) eine Signatur aufweist, die auf der Hadamard-Transformation beruht und die mehrfach wiederholt ist, dass der Detektor (14) eine Mehrzahl von Detektorelementen (20) aufweist, die den einzelnen Wiederholungen der Signatur zugeordnet sind, und dass die zusammengehörigen Ausgangssignale der Detektorelemente (20) miteinander verknüpft sind (Figur 3).

10. Detektor (40) nach Anspruch 8, **dadurch gekennzeichnet, dass** das von der Basisstation (12) empfangene Signal (13) eine Signatur aufweist, die auf der Hadamard-Transformation beruht und die mehrfach wiederholt ist, dass der Detektor (40) eine Mehrzahl von Detektorelementen (20) aufweist, die den einzelnen Wiederholungen der Signatur zugeordnet sind, dass die zusammengehörigen Ausgangssignale der Detektorelemente (20) blockweise verknüpft sind, und dass die Ausgangssignale der Blöcke miteinander verknüpft sind (Figur 4).

11. Detektor (50) nach Anspruch 8, **dadurch gekennzeichnet, dass** das von der Basisstation (12) empfangene Signal (13) eine Signatur aufweist, die auf der Hadamard-Transformation beruht und die mehrfach wiederholt ist, dass die Wiederholungen der Signatur miteinander verknüpft sind, und dass der Detektor (50) ein Detektorelement (20) aufweist, dem die Ausgangssignale der Verknüpfungen zugeführt sind (Figur 5).

12. Detektor (60) nach Anspruch 8, **dadurch gekennzeichnet, dass** das von der Basisstation (12) empfangene Signal (13) eine Signatur aufweist, die auf der Hadamard-Transformation beruht und die mehrfach wiederholt ist, dass die Wiederholungen der Signatur miteinander verknüpft sind, dass die Verknüpfungen der Wiederholungen blockweise zusammengefasst sind, und dass der Detektor (60) eine der Anzahl der Blöcke entsprechende Anzahl von Detektorelementen (20) aufweist, denen die Ausgangssignale der Verknüpfungen zugeführt sind (Figur 6).

13. Basisstation (12) eines funkbetriebenen Telekommunikationssystems (10) mit einem Detektor (14, 40, 50, 60) nach einem der Ansprüche 8 bis 12.

14. Funkbetriebenes Telekommunikationssystem (10) mit einer Basisstation (12), die mit einem Detektor (14, 40, 50, 60) nach einem der Ansprüche 8 bis 12 versehen ist.
